Europäisches Patentamt

European Patent Office

Office européen des brevets

(11) Veröffentlichungsnummer: **0 237 707**
**A2**

## (12) EUROPÄISCHE PATENTANMELDUNG

(21) Anmeldenummer: **87100371.1**

(22) Anmeldetag: **14.01.87**

(51) Int. Cl.⁴: **G09F 13/28** , **H04N 3/12**

(30) Priorität: **20.03.86 DE 3609436**

(43) Veröffentlichungstag der Anmeldung:
**23.09.87 Patentblatt 87/39**

(84) Benannte Vertragsstaaten:
**CH DE FR GB LI NL SE**

(71) Anmelder: **VDO Adolf Schindling AG**
**Gräfstrasse 103**
**D-6000 Frankfurt/Main(DE)**

(72) Erfinder: **Baeger, Holm, Dr.**
**Salzbornstrasse 1**
**D-6231 Schwalbach(DE)**
Erfinder: **Ahnert, Christoph**
**Schönbergstrasse 27**
**D-6242 Kronberg(DE)**

(74) Vertreter: **Klein, Thomas, Dipl.-Ing. (FH)**
**Sodener Strasse 9 Postfach 6140**
**D-6231 Schwalbach a. Ts.(DE)**

(54) **Anzeigevorrichtung.**

(57) Die Erfindung bezieht sich auf eine Anzeigevorrichtung mit einem Anzeigefeld, das eine Vielzahl von in einem bestimmten Schema angeordneten Leuchtelementen zum Aussenden von Licht in verschiedenen Farben aufweist. Dabei ist jedes Leuchtelement aus einem Satz von verschiedenfarbigen Leuchtbereichen 13 zumindest der Farben Rot, Grün und Blau gebildet. Jeder der aneinander angrenzenden Leuchtbereiche 13 weist ein separat ansteuerbares Lichtventil auf, dessen Lichtdurchtrittsfläche von einem Farbfilter 18, 18′ abgedeckt ist.

Fig.1

## Anzeigevorrichtung

Die Erfindung betrifft eine Anzeigevorrichtung mit einem Anzeigefeld, das eine Vielzahl von in einem bestimmten Schema angeordneten Leuchtelementen zum Aussenden von Licht in verschiedenen Farben aufweist, wobei jedes Leuchtelement aus einem Satz von verschiedenfarbigen Leuchtbereichen zumindest der Farben Rot, Grün und Blau gebildet ist.

Bei derartigen Anzeigevorrichtungen ist es bekannt, die Leuchtelemente durch mehrere Kathodenstrahlröhren zu bilden, wobei jeder Leuchtbereich eine Kathodenstrahlröhre besitzt. Durch eine Vielzahl solcher nebeneinander angeordneter Leuchtelemente werden Anzeigefelder z.B. für Großanzeigevorrichtungen, wie Lichtanzeigetafeln und Werbebilder gebildet, deren punktmatrixartige Bilddarstellung farbig erzeugt wird. Da die Leuchtelemente Kathodenstrahlröhren zumindest in den Farben Rot, Grün und Blau besitzen, ist durch Einzelansteuerung oder gemeinsamer Ansteuerung der Kathodenstrahlröhren jede Farbe durch jedes Leuchtelement darstellbar.

Von Nachteil ist es bei diesen Anzeigevorrichtungen, daß die Frequenz,mit der die Bilder gewechselt werden können, aufgrund der langen Nachglühzeiten der Kathodenstrahlröhren nicht sehr hoch sein kann.

Ein weiteres Problem besteht darin, daß der Kontrast der sonnenbeschienenen Anzeige erheblich reduziert ist.

Außerdem benötigt die bekannte Anzeigevorrichtung zum Betrieb eine hohe Leistung, welche wiederum viel Wärme produziert, die durch aufwendige Kühleinrichtungen abgeführt werden muß.

Sowohl diese Kühleinrichtungen als auch die Ansteuerelektrik erfordern viel Platz, so daß diese Anzeigevorrichtungen großvolumig und schwer sind.

Aufgabe der Erfindung ist es daher, eine Anzeigevorrichtung nach dem Oberbegriff zu schaffen, die bei einfachem Aufbau eine kontrastreiche Darstellung von mit hoher Frequenz änderbaren Bildern ermöglicht.

Diese Aufgabe wird erfindungsgemäß dadurch gelöst, daß jeder der aneinander angrenzenden Leuchtbereiche ein separat ansteuerbares Lichtventil aufweist, dessen Lichtdurchtrittsfläche von einem Farbfilter abgedeckt ist. Diese Ausbildung ermöglicht es, mit geringer Schaltleistung und hochfrequent die Lichtventile anzusteuern und damit das Bild zu ändern, ohne daß nur relativ träge ein-und ausschaltbare Lampen die Schaltfrequenz verlangsamend beeinflussen können.

Vorzugsweise sind dabei die Lichtventile Flüssigkristallzellen.

Dies hat den Vorteil, daß eine schnelle Umschaltbarkeit bei äußerst geringer Schaltleistung ermöglicht wird. Eine Wärmeentwicklung ist bei den Flüssigkristallzellen praktisch nicht vorhanden, so daß auf Kühleinrichtungen verzichtet werden kann. Dieses als auch das geringe Volumen der erforderlichen Elektronik ermöglichen einen leichten und damit auch billigen Aufbau der Anzeigevorrichtung mit geringer Bautiefe.

Die Flüssigkristallzellen können sowohl transmissive als auch reflektive Flüssigkristallzellen sein. Besonders vorteilhaft ist es aber, wenn die Flüssigkristallzeller transflektive Flüssigkristallzellen sind. Damit kann durch rückseitige Beleuchtung bei geringem Umgebungslicht eine kontrastreiche Darstellung erreicht werden. Bei starkem Umgebungslicht,insbesondere bei Sonnenbeaufschlagung führt die Lichtreflexion ebenfalls zu einer kontraststarken Darstellung der Bilder. Solche Darstellungen sind aus allen Blickwinkeln kontrastreich.

Ein einfacher Aufbau ergibt sich dadurch, daß ein Leuchtelement eine alle ihm zugeordneten Leuchtbereiche überdeckende Flüssigkristallzelle aufweist, wobei es besonders günstig ist, wenn auf der einen transparenten Zellenwand der Flüssigkristallzelle eine gemeinsame, alle Leuchtbereiche überdeckende Flächenelektrode angeordnet ist, und die andere transparente Zellenwand je eine einem Leuchtbereich zugeordnete Flächenelektrode trägt.

Eine günstige Aufteilung der einzelnen Anzeigeflächen wird dadurch erreicht, daß die Flüssigkristallzelle eine kreisrunde Anzeigefläche besitzt und die Leuchtbereiche etwa gleichgroße, die Anzeigefläche abdeckende Kreissektoren sind.

Die Farbfilter sind vorzugweise auf der Außenfläche der dem Beobachter abgewandten Zellenwand angeordnet.

Bestehen die Lichtventile aus mehreren gleichen, in Lichtdurchtrittsrichtung hintereinander angeordneten, synchron ansteuerbaren Flüssigkristallzellen, wobei vorzugsweise die Flüssigkristallzellen ein sandwichartiges Zellenpaket bilden und jeweils die dem Beobachter abgewandte Zellenwand eine Flüssigkristallzelle die dem Beobachter zugewandte Zellenwand der benachbarten Flüssigkristallzelle bildet, so kommt es zu einer erheblichen Kontrasterhöhung.

Weisen dabei die Flüssigkristallzellen des Zellenpakets Flüssigkristallschichten geringer Dicke auf, so ist eine noch höhere Umschaltfrequenz der Flüssigkristallzellen möglich. Damit erreicht man ohne weiteres eine Anzeige mit Videotauglichkeit.

Die Flüssigkristallschichten können dabei eine Dicke von 3 bis 6μm, vorzugweise von etwa 5μm besitzen.

Die Anzeigevorrichtung kann eine die dem Beobachter abgewandte Seite des Anzeigenfeldes überdeckende Lichtquelle besitzen, die z.B. als Lichtkasten ausgebildet sein kann und so zu einem sehr einfachen Aufbau führt. Besitzt jedes Leuchtelement eine Lichtquelle, so erfolgt keine wesentliche Beeinträchtigung der Gesamtanzeige bei Ausfall einer Lichtquelle. Diese ist dann auch auf einfache Weise austauschbar. Derartige Lichtquellen haben eine lange Lebensdauer, da sie nicht im ständigen Ein-und Ausschaltetrieb betrieben werden, sondern während der gesamten Betriebszeit der Anzeige permanent leuchten.

Ist die Lichtquelle eine weißes Licht erzeugende Lichtquelle, so erfolgt keine Verfälschung der Farben. Besonders vorteilhaft ist es dabei, wenn die Lichtquelle eine Leuchtstofflampe ist, da diese sowohl nur eine niedrige Leistung benötigt, als auch nur wenig Wärme produziert und eine hohe Lebensdauer besitzt.

Ein kontrastreicher, farbiger Lichtpunkt wird dadurch erreicht, daß das Leuchtelement ein mit einer Stirnseite einem Beobachter zugewandtes rohrförmiges Gehäuse besitzt, dessen dem Beobachter zugewandte Öffnung durch das Lichtventil verschlossen ist, wobei das Gehäuse einen viereckigen oder auch einen runden Querschnitt besitzen kann.

Eine einfache Montier-und Austauschbarkeit wird dadurch erreicht, daß das Gehäuse im Bereich seiner dem Beobachter zugewandten Stirnseite mit einer Lichtventilsteuerung verbundene Kontaktflächen aufweist, an die Kontaktierungsflächen des Lichtventils anlegbar sind. Dazu können die Kontaktflächen und/oder die Kontaktierungsflächen Federkontakte sein.

Eine leichte Montier-und Demontierbarkeit und ein geringer Bauteilaufwand wird dadurch erreicht, daß das Lichtventil durch einen auf der dem Beobachter zugewandten Stirnseite des Gehäuses anordenbare Gehäusering mit seinen Kontaktierungsflächen in Anlage an den Kontaktflächen haltbar ist, wobei vorzugsweise der Gehäusering überwurfmutterartig ausgebildet und auf das Gehäuse aufschraubbar ist.

Bilden Gehäuse, Lichtventil und Lichtquelle eine Baueinheit, so können derartige Baueinheiten bei einem Defekt leicht und schnell ausgetauscht werden. Außerdem ist es möglich, mit derartigen Baueinheiten herkömmliche Anzeigevorrichtungen nach dem Stand der Technik auf einfache Weise umzurüsten.

Sind mehrere Baueinheiten nebeneinanderliegend aneinander anordenbar und besitzen diese möglichst auch noch Steckverbindungselemente mit denen sie nebeneinanderliegend miteinander verbindbar sind, so sind auf einfache Weise Anzeigevorrichtungen mit Anzeigefeldern beliebiger Größe und geringen Gewichts zusammenstellbar.

Ein Ausführungsbeispiel der Erfindung ist in der Zeichnung dargestellt und wird im folgenden näher beschrieben. Es zeigen

Figur 1 eine Baueinheit aus Gehäuse, Lichtventil und Lichtquelle im Querschnitt,

Figur 2 eine stirnseitige Ansicht der Baueinheit nach Figur 1,

Figur 3 eine Schnittansicht entlang der Linie I-I in Figur 1,

Figur 4 einen Ausschnitt eines Anzeigefeldes mit einer Vielzahl Baueinheiten nach Figur 1,

Figur 5 ein weiteres Ausführungsbeispiel eines Lichtventils im Querschnitt.

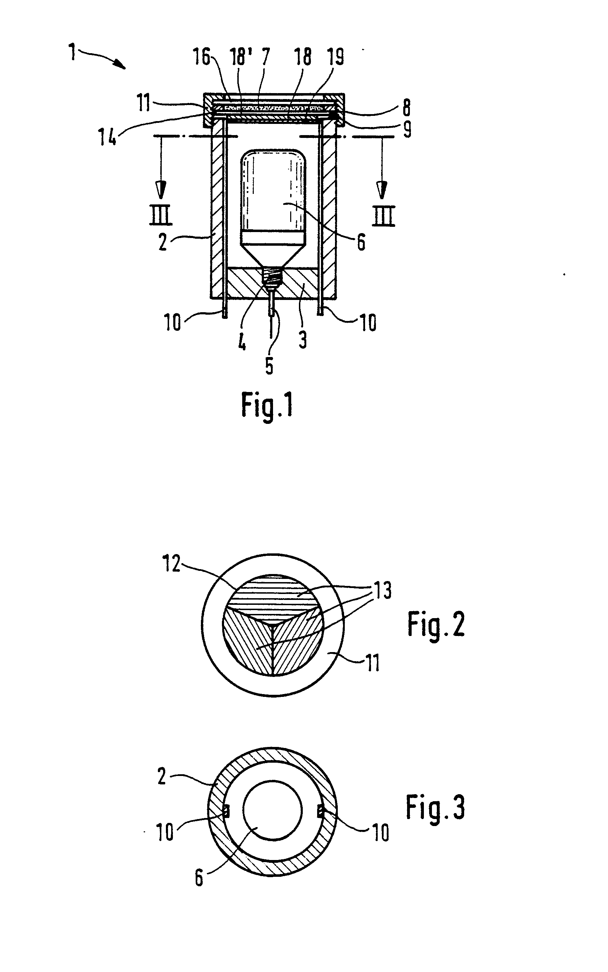

Die in Figur 1 dargestellte Baueinheit 1 besteht aus einem rohrförmigen Gehäuse 2 runden Querschnitts,dessen einem Beobachter abgewandte Stirnseite durch eine Sockelplatte 3 verschlossen ist, die zentrisch eine Fassung zum Einschrauben eines normalen Schraubsockels 4 einer Glühlampe besitzt. Von der Fassung geht ein zur Außenseite der Sockelplatte 3 führender Anschlußkontakt 5 aus.

Die Glühlampe ist eine weißes Licht erzeugende Leuchtstofflampe 6. Sowohl die Innenwand des Gehäuses 2 als auch der Sockelplatte 3 sind mit einer Reflexionsschicht belegt, um so die Leuchtkraft der Baueinheit zu erhöhen.

Die einem Beobachter zugewandte Stirnseite des Gehäuses 2 ist durch eine Flüssigkristallzelle 7 verschlossen, die mit ihrem mit Federkontakten 8 versehenen radial umlaufenden Randbereich auf der ringförmigen Stirnseite des Gehäuses 2 aufliegt, wobei die Federkontakte 8 auf Kontaktflächen 9 des Gehäuses 2 aufliegen.

Anschlußkontakte 10 führen von den Kontaktflächen 9 an der Innenwand des Gehäuses 2 und durch die Sockelplatte 3 zur einem Beobachter abgewandten Seite des Gehäuses 2.

Die Flüssigkristallzelle 7 ist durch einen überwurfmutterartigen Gehäusering 11,der auf das beobachterseitige Ende des Gehäuses 2 aufgeschraubt ist, am Gehäuse 2 gehalten.

Die Flüssigkristallzelle 7 besitzt eine kreisrunde Anzeigefläche 12 mit drei Leuchtbereichen 13, die durch etwa gleichgroße, die Anzeigefläche 12 abdeckende Kreissektoren gebildet sind.

Diese Leuchtbereiche 13 werden dadurch gebildet, daß auf der dem Beobachter abgewandten transparenten Zellenwand 14 der Flüssigkristallzelle 7 eine gemeinsame, alle Leuchtbe reiche 13 überdeckende Flächenelektrode angeordnet ist. Die dem Beobachter zugewandte transparente Zellenwand 16 trägt drei Flächenelektroden, von denen jeweils eine einem Leuchtbereich 13 zugeordnet ist und auch dessen kreissektorförmige Konfiguration besitzt.

Auf der Außenfläche der dem Beobachter abgewandten Zellenwand 14 sind drei Farbfilter 18 und 18' in den Farben Rot, Blau und Grün angeordnet. Sie besitzen die gleiche kreissektorförmige Konfiguration wie die Flächenelektroden auf der beobachterseitigen Wand 14 und überdecken sich mit diesen in axialer Richtung des Gehäuses 2 gesehen.

Auf der der Leuchtstofflampe 6 zugewandten Seite tragen die Farbfilter 18 und 18' einen Transflektor 19, so daß die Flüssigkristallzelle 7 eine transflektive Flüssigkristallzelle ist.

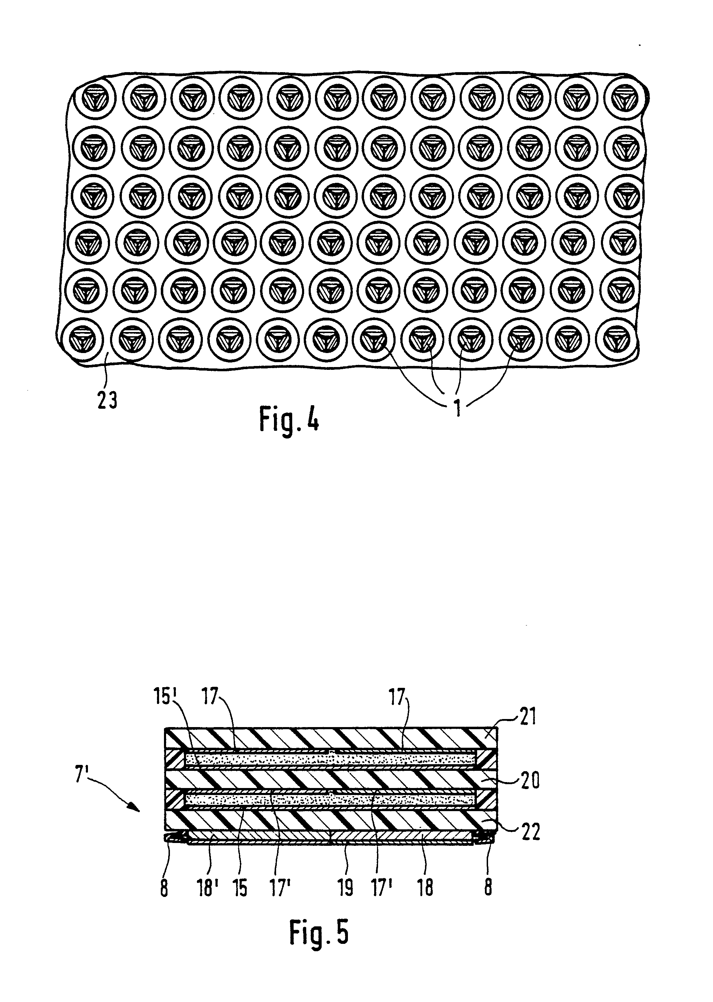

In Figur 5 ist ein anderes Ausführungsbeispiel einer Flüssigkristallzelle 7' dargestellt. Sie besteht aus mehreren in Lichtdurchtrittsrichtung hintereinander angeordneten synchron ansteuerbaren und ein sandwichartiges Zellenpaket bildenden Flüssigkristallzellen. Dabei bildet die dem Beobachter abgewandte mittlere Zellenwand 20 der vorderen Flüssigkristallzelle die dem Beobachter zugewandte Zellenwand 20 der benachbarten, hinteren Flüssigkristallzelle. Die Zellenwand 21 ist dabei entsprechend der Zellenwand 16 und die Zellenwand 22 entsprechend der Zellenwand 14 mit Flächenelektroden 15 bzw. 17 versehen.

Die Zellenwand 20 trägt auf ihrer oberen Fläche eine der Flächenelektrode 15 entsprechende Flächenelektrode 15' und auf ihrer unteren Fläche den Flächenelektroden 17 entsprechende Flächenelektroden 17'.

Auf die gleiche Weise wie die Flüssigkristallzelle 7 trägt auch die Flüssigkristallzelle 7' auf ihrer dem Beobachter abgewandten Seite die Farbfilter 18 und 18', den Transflektor 19 sowie die Federkontakte 8.

Figur 4 zeigt einen Ausschnitt eines Anzeigefeldes, das eine Vielzahl von in einem gleichmäßigen Schema auf einer Trägerplatte 23 einer Anzeigevorrichtung angeordnete Baueinheit 1 aufweist. Diese sind vorzugsweise lösbar an der Trägerplatte 23 angeordnet, so daß ein einfacher Austausch z.B. defekter Baueinheiten 1 möglich ist. Durch die entsprechende Ansteuerung nur eines oder mehrerer Leuchtbereiche kann jeder von einer Baueinheit 1 gebildete Leuchtpunkt die entsprechende Farbe erhalten.

In einer nicht dargestellten, besonders günstigen Ausbildung sind die Flüssigkristallzellen 7 und 7' an einer zellenwandseitigen Grenzfläche ihrer Zellenräume, dort, wo die Flüssigkristallsubstanz angrenzt, mit einer Vielzahl Vertiefungen ausgebildet. Diese Vertiefungen überdecken im wesentlichen aneinander angrenzend die gesamte Grenzfläche und besitzen an den über die Flächenerstreckung jeder Vertiefung verteilten Stellen unterschiedliche Tiefen. Dabei bewirken diese Tiefen entsprechend den jeweils an diesen Stellen vorhandenen Gesamtdicken der Flüssigkristallschicht Lichtfärbungen, welche im Bereich der Flächenerstreckung einer Vertiefung zumindest weitgehend das gesamte Farbspektrum aufweisen. Diese Ausbildung führt zu einem besonders großen Blickwinkel, unter dem die Anzeigeflächen 12 in ihrem Ansteuerzustand klar erkennbar sind. Somit ist auch das ganze Anzeigefeld von den verschiedensten Positionen aus gut erkennbar.

## Ansprüche

1. Anzeigevorrichtung mit einem Anzeigefeld, das eine Vielzahl von in einem bestimmten Schema angeordneten Leuchtelementen zum Aussenden von Licht in verschiedenen Farben aufweist, wobei jedes Leuchtelement aus einem Satz von verschiedenfarbigen Leuchtbereichen zumindest der Farben Rot, Grün und Blau gebildet ist, dadurch gekennzeichnet, daß jeder der aneinander angrenzenden Leuchtbereiche (13) ein separat ansteuerbares Lichtventil aufweist, dessen Lichtdurchtrittsfläche von einem Farbfilter (18, 18') abgedeckt ist.

2. Anzeigevorrichtung nach Anspruch 1, dadurch gekennzeichnet , daß die Lichtventile Flüssigkristallzellen (7, 7') sind.

3. Anzeigevorrichtung nach Anspruch 2, dadurch gekennzeichnet , daß die Flüssigkristallzellen transmissive Flüssigkristallzellen sind.

4. Anzeigevorrichtung nach Anspruch 2, dadurch gekennzeichnet, daß die Flüssigkristallzellen reflektive Flüssigkristallzellen sind.

5. Anzeigevorrichtung nach Anspruch 2, dadurch gekennzeichnet, daß die Flüssigkristallzellen (7, 7') transflektive Flüssigkristallzellen sind.

6. Anzeigevorrichtung nach einem der vorhergehenden Ansprüche, dadurch gekennzeichnet, daß ein Leuchtelement eine alle ihm zugeordneten Leuchtbereiche (13) überdeckende Flüssigkristallzelle (7, 7') aufweist.

7. Anzeigevorrichtung nach Anspruch 6, dadurch gekennzeichnet, daß auf der einen transparenten Zellenwand (14, 22) der Flüssigkristallzelle (7, 7') eine gemeinsame, alle Leuchtbereiche (13) überdeckende Flächenelektrode (15) angeordnet ist und die andere transparente Zellenwand (16, 21) je eine einem Leuchtbereich (13) zugeordnete Flächenelektrode (17) trägt.

8. Anzeigevorrichtung nach Anspruch 7, dadurch gekennzeichnet, daß die Flüssigkristallzelle (7, 7') eine kreisrunde Anzeigefläche (12) besitzt und die Leuchtbereiche (13) etwa gleichgroße, die Anzeigefläche (12) abdeckende Kreissektoren sind.

9. Anzeigevorrichtung nach einem der vorhergehenden Ansprüche, dadurch gekennzeichnet, daß die Farbfilter (18, 18') auf der Außenfläche der dem Beobachter abgewandten Zellenwand (14, 22) angeordnet sind.

10. Anzeigevorrichtung nach einem der vorhergehenden Ansprüche, dadurch gekennzeichnet, daß die Lichtventile aus mehreren gleichen, in Lichtdurchtrittsrichtung hintereinander angeordneten, synchron ansteuerbaren Flüssigkristallzellen bestehen.

11. Anzeigevorrichtung nach Anspruch 10, dadurch gekennzeichnet, daß die Flüssigkristallzellen ein sandwichartiges Zellenpaket bilden, wobei jeweils die dem Beobachter abgewandte Zellenwand (20) einer Flüssigkristallzelle, die dem Beobachter zugewandte Zellenwand (20) der benachbarten Flüssigkristallzelle bildet.

12. Anzeigevorrichtung nach Anspruch 11, dadurch gekennzeichnet, daß die Flüssigkristallzellen des Zellenpakets Flüssigkristallschichten geringer Dicke aufweisen.

13. Anzeigevorrichtung nach Anspruch 12, dadurch gekennzeichnet, daß die Flüssigkristallschichten eine Dicke von etwa 3 bis 6$\mu$m besitzen.

14. Anzeigevorrichtung nach Anspruch 13, dadurch gekennzeichnet, daß die Flüssigkristallschichten eine Dicke von etwa 5$\mu$m besitzen.

15. Anzeigevorrichtung nach einem der vorhergehenden Ansprüche, dadurch gekennzeichnet, daß die Anzeigevorrichtung eine die dem Beobachter abgewandte Seite des Anzeigenfeldes überdeckende Lichtquelle besitzt.

16. Anzeigevorrichtung nach einem der Ansprüche 1 bis 14, dadurch gekennzeichnet, daß jedes Leuchtelement eine Lichtquelle besitzt.

17. Anzeigevorrichtung nach einem der Ansprüche 15 oder 16, dadurch gekennzeichnet, daß die Lichtquelle eine weißes Licht erzeugende Lichtquelle ist.

18. Anzeigevorrichtung nach Anspruch 17, dadurch gekennzeichnet, daß die Lichtquelle eine Leuchtstofflampe (6) ist.

19. Anzeigevorrichtung nach einem der vorhergehenden Ansprüche, dadurch gekennzeichnet, daß das Leuchtelement ein mit einer Stirnseite einem Beobachter zugewandtes rohrförmiges Gehäuse (2) besitzt, dessen dem Beobachter zugewandte Öffnung durch das Lichtventil verschlossen ist.

20. Anzeigevorrichtung nach Anspruch 19, dadurch gekennzeichnet, daß das Gehäuse einen viereckigen Querschnitt besitzt.

21. Anzeigevorrichtung nach Anspruch 19, dadurch gekennzeichnet, daß das Gehäuse (2) einen runden Querschnitt besitzt.

22. Anzeigevorrichtung nach Anspruch 19, dadurch gekennzeichnet, daß das Gehäuse (2) im Bereich seiner dem Beobachter zugewandten Stirnseite mit einer Lichtventilsteuerung verbundene Kontaktflächen (9) aufweist, an die Kontaktierungsflächen des Lichtventils anlegbar sind.

23. Anzeigevorrichtung nach Anspruch 22, dadurch gekennzeichnet, daß die Kontaktflächen und/oder die Kontaktierungsflächen Federkontakte (8) sind.

24. Anzeigevorrichtung nach Anspruch 19, dadurch gekennzeichnet, daß das Lichtventil durch einen auf der dem Beobachter zugewandten Stirnseite des Gehäuses (2) anordenbaren Gehäusering (11) mit seinen Kontaktierungsflächen in Anlage an den Kontaktflächen haltbar ist.

25. Anzeigevorrichtung nach Anspruch 24, dadurch gekennzeichnet, daß der Gehäusering (11) überwurfmutterartig ausgebildet und auf das Gehäuse (2) aufschraubbar ist.

26. Anzeigevorrichtung nach einem der vorhergehenden Ansprüche, dadurch gekennzeichnet, daß Gehäuse (2), Lichtventil und Lichtquelle eine Baueinheit (1) bilden.

27. Anzeigevorrichtung nach Anspruch 26, dadurch gekennzeichnet, daß mehrere Baueinheiten (1) nebeneinanderliegend aneinander anordenbar sind.

28. Anzeigevorrichtung nach Anspruch 27, dadurch gekennzeichnet, daß die Baueinheit Steckverbindungselemente besitzen, mit denen sie nebeneinanderliegend miteinander verbindbar sind.

**Fig.1**

**Fig.2**

**Fig.3**

**Fig. 4**

23    1

**Fig. 5**

15'  17        17    21
7'   20
22
8   18'  15  17'   19  17'  18   8